Europäisches Patentamt

European Patent Office

Office européen des brevets

(11) Veröffentlichungsnummer: **0 372 372**
**A2**

## (12) EUROPÄISCHE PATENTANMELDUNG

(21) Anmeldenummer: 89122041.0

(22) Anmeldetag: 29.11.89

(51) Int. Cl.⁵: **G03B 27/10**

(30) Priorität: 07.12.88 DE 3841100

(43) Veröffentlichungstag der Anmeldung:
**13.06.90 Patentblatt 90/24**

(84) Benannte Vertragsstaaten:
**AT BE CH DE ES FR GB GR IT LI LU NL SE**

(71) Anmelder: **Wulff, Michael**
**Grambeker Weg 161**
**D-2410 Mölln(DE)**

(72) Erfinder: **Wulff, Michael**
**Grambeker Weg 161**
**D-2410 Mölln(DE)**

(74) Vertreter: **von Raffay, Vincenz, Dipl.-Ing. et al**
**Patentanwälte Raffay & Fleck Postfach 32 32**
**17**
**D-2000 Hamburg 13(DE)**

(54) **Kopiervorrichtung zum Modifizieren (Verzerren) von Filmvorlagen.**

(57) Die Vorrichtung zum Modifizieren (Verzerren) von Filmvorlagen, die auf einem zu belichtenden Film angeordnet sind, weisen eine Halterung 15 zum Einspannen der Vorlage 19 zur Durchführung der Relativbewegung über Vorlage und Film 20 auf. Eine Lichtquelle ist auf einem Belichtungswagen 1 über Vorlage und Film bewegbar. An dem Belichtungswagen sind Andrückwalzen 4,5 befestigt, die auf der Vorlage 19 abrollen. Um die Einspannung einfach zu gestalten, wird die Vorlage nur auf einer Seitenkante parallel zur Bewegungsrichtung des Belichtungswagens der Halterung 15 eingespannt. Die Bewegung der Halterung 15 über den zu belichtenden Film und damit auch relativ zu der anderen Bewegung, derjenigen des Belichtungswagens 1, wird durch eine Kopplung auf die Andrückwalzen übertragen, um einen Filmverzug durch diese Relativbewegung zu vermeiden. Diese Kopplung geschieht durch eine auf der Halterung 15 befestigte Zahnstange 14, in die ein Ritzel 8 eingreift, dessen Drehbewegung über ein Getriebe 7 auf die Andrückwalzen übertragen wird.

Fig.2

## Kopiervorrichtung zum Modifizieren (Verzerren) von Filmvorlagen.

Die Erfindung betrifft eine Kopiervorrichtung nach dem Oberbegriff des Patentanspruches 1.

Derartige Kopiervorrichtungen dienen dem fotomechanischen Modifizieren von Filmvorlagen, die in Längsrichtung und/oder Querrichtung verzerrt, d.h. gestaucht oder gedehnt werden sollen. Die Filmvorlage wird hierzu auf dem zu belichtenden Film angebracht. Die Lichtquelle wird über die Filmvorlage und den Film gefahren. Die Bewegung zwischen Film und Filmvorlage wird bei bekannten Kopiervorrichtungen beispielsweise dadurch erzeugt, daß die Filmvorlage an mindestens zwei Seiten fest eingespannt und in der Achse, in der die Lichtquelle bewegt wird, über den Film bewegt wird. Es ist auch eine andere Bewegungsart möglich, bei der die Filmvorlage feststeht und der Film bewegt wird.

Bei einer bekannten Vorrichtung wird die Filmvorlage unter einem aufschwenkbaren Rahmen auf einer Spannfolie oder Glasscheibe befestigt. Hierbei kann es sehr leicht zum Filmverzug beim Befestigen oder beim Belichten kommen. Dieses hat wiederum nachteilige Auswirkungen auf das Kopierergebnis. Hinzukommt, daß sich zwischen der Filmvorlage und der Lichtquelle eine Glasscheibe bzw. eine Kunststoffolie befindet, wodurch die Qualität der Belichtung vermindert wird. Schließlich ist der mechanische Aufwand verhältnismäßig groß.

Der Erfindung liegt nun die Aufgabe zugrunde, eine Kopiervorrichtung der eingangs genannten Art zu schaffen, die einfach aufgebaut und leicht zu bedienen ist, und ein verzugsfreies Befestigen des Vorlagefilms ermöglicht, und eine Beeinträchtigung der Belichtung durch ein störendes Medium vermeidet. Diese Aufgabe wird durch das Kennzeichen des Anspruches 1 gelöst.

Erfindungsgemäß wird die Vorlage nur auf einer Seite eingespannt, so daß die Einspannung sehr einfach und schnell zu erzielen ist. Die Halterung, die die Einspannung besorgt, wird bewegt, um die Bewegung zwischen Vorlage und Film zu erzeugen. Die Andrückwalze oder die Andrückwalzen drücken hierbei die Filmvorlage auf den Film. Die Lichtquelle, die normalerweise auf einem Belichtungswagen zusammen mit den Andrückwalzen angeordnet ist, wird in üblicher Weise bewegt. Es finden also zwei Bewegungen statt, die des Halters mit der Vorlage und die des Lichtquellenwagens mit den Andrückwalzen. Es findet auch eine Relativbewegung zwischen Andrückwalzen und der Halterung statt. Dieses kann zu Verwerfungen und damit zur Beeinflussung der Qualität beim Kopieren führen. Die Erfindung vermeidet derartige Verwerfungen dadurch, daß die Relativbewegung durch die Zwangskopplung zwischen Andrückwalzen und Halterung ausgeglichen wird, d.h. die Bewegung der Halterung wird auf die Andrückwalzen übertragen.

Zur konstruktiven Gestaltung der Kopplung sind verschiedene Ausführungen denkbar. Eine vorteilhafte Ausführungsform ist in den Ansprüchen 2 und 3 unter Schutz gestellt. Die Andrückwalzen rollen durch die Kopplung nach der Erfindung, unabhängig von der Größe der Relativbewegung zwischen Vorlage und Film in der richtigen Geschwindigkeit ab, d.h. von den Walzen werden weder Vor- und Rückwärtsbewegungen auf Vorlage bzw. Film ausgeübt.

Im folgenden wird die Erfindung unter Hinweis auf die Zeichnung anhand eines Ausführungsbeispieles näher erläutert.

Es zeigt:

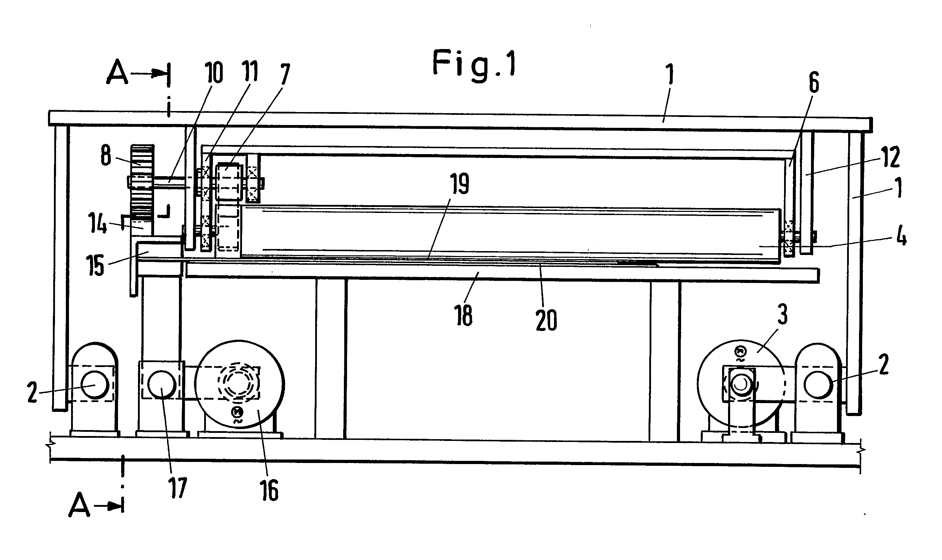

Fig. 1 eine Seitenansicht einer Ausführungsform einer Kopiervorrichtung nach der Erfindung;

Fig. 2 einen Schnitt gemäß der Linie A-A der Fig. 1;

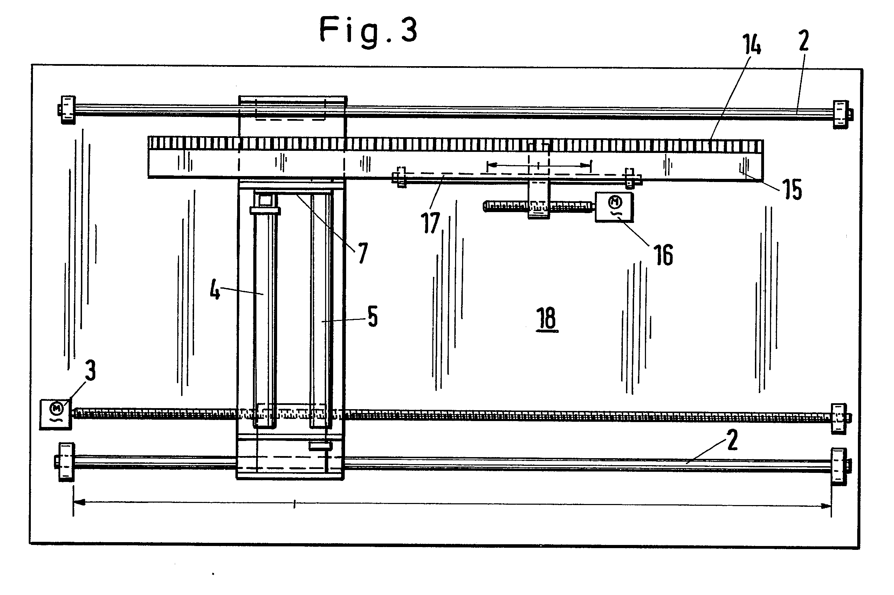

Fig. 3 eine Draufsicht auf die Darstellungen der Fig. 1 und 2.

Die in der Zeichnung dargestellte Kopiervorrichtung besteht aus einem ortsfesten Gestell, auf dem ein Belichtungswagen 1 hin- und herbewegbar angeordnet ist. Auf dem Belichtungswagen 1 befindet sich die nicht gezeigte Lichtquelle und eine nicht gezeigte Strichblende, die eine Spaltblende oder auch eine optische Blende, eine Sammellinse, sein kann. Diese nicht gezeigten Teile sind für die Erfindung nicht von wesentlicher Bedeutung, so daß sie hier nicht näher beschrieben werden.

Weiterhin sind auf dem Belichtungswagen 1 zwei Andrückwalzen 4,5 befestigt, die in einer Lagerung 12 an dem Belichtungswagen 1 befestigt sind. Die Lagerung erfolgt unter Zwischenschaltung eines Gestells, das durch zwei Wangen 6 und 11 gebildet wird, die fest miteinander verbunden sind und einen nach unten offenen Rahmen bilden, in dem die Andrückwalzen 4 und 5 gelagert sind. Der Belichtungswagen wird durch einen Antriebsmotor 3 über eine Schnecke hin- und herbewegt. Für eine parallele Führung sorgen Führungen 2.

Auf dem Gestell ist ein Tisch 18 vorgesehen, auf dem der zu belichtende Film 20 und auf diesem wiederum die Vorlage 19 angeordnet ist. Der Film 20 ist durch Kleben oder Saugen auf dem Tisch befestigt. Die Vorlage 19 ist in einer Halterung 15 an einer Seitenkante eingespannt. Die Halterung wird zur Erzeugung der Relativbewegung zwischen Vorlage 19 und Film 20 durch einen Antriebsmotor 16 bewegt. Der Antriebsmotor überträgt seine Antriebsbewegung über eine Spindel, die parallel zu einer Führung 17 verläuft.

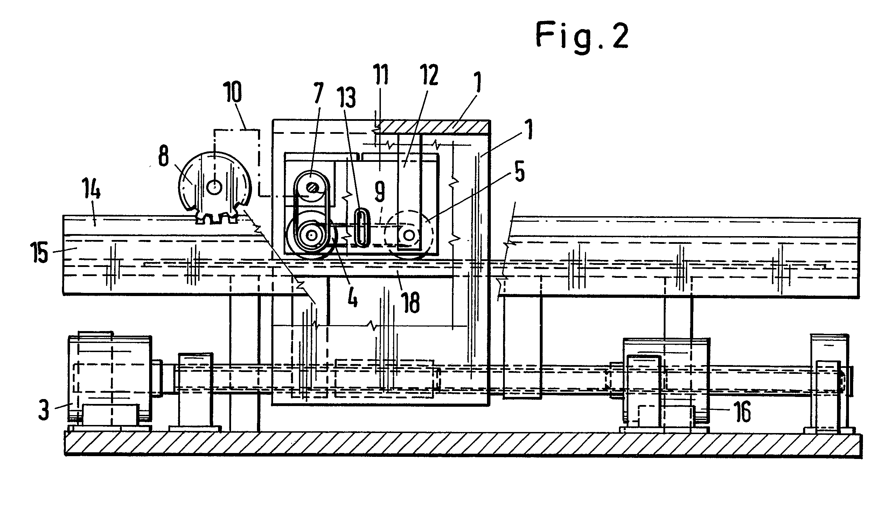

Auf der Halterung 15 ist in Bewegungsrichtung verlaufend eine Zahnstange 14 befestigt. In die Zahnstange 14 greift ein Ritzel 8 ein, das über eine Welle 10 (die in Fig. 2 als strichpunktierte Linie zur besseren Verdeutlichung angedeutet ist) mit einer Riemenscheibe eines Getriebes 7 verbunden ist. Die Drehbewegung der Riemenscheibe wird über einen Riemen auf eine weitere Riemenscheibe übertragen, die mit der ersten Andrückwalze 4 verbunden ist. Diese Drehbewegung wird auf die zweite Andrückwalze durch einen Riemen 9 übertragen, so daß die beiden Andrückwalzen 4 und 5 sich synchron bewegen.

In Fig. 2 ist noch eine Befestigung bei 10 für die Strichblende angedeutet.

Wenn die nicht gezeigte Lichtquelle mit dem Belichtungswagen 1 und der Strichblende durch den Antriebsmotor 3 zur Durchführung des Kopiervorganges über Vorlage und Film bewegt wird, rollt das Ritzel 8 auf der Zahnstange 14 ab. Wenn die Filmvorlage durch den Antriebsmotor 16 relativ zu dem Film bewegt wird, bewegt sich die Zahnstange 14 mit, so daß diese Bewegung über das Ritzel 8 die Welle 10 und das Getriebe 7 sowie den Riemen 8 auf beide Walzen 4 und 5 übertragen wird. Ein Filmverzug, bedingt durch die Relativbewegung zwischen Vorlage und Film, der wegen der einfachen einseitigen Ein spannung auftreten könnte, wird durch diese Kopplung, d.h. den entsprechenden Antrieb der Andrückwalzen, über das Ritzel 8 vermieden. Die Vorrichtung ist sehr einfach zu bedienen, weist hohe Belichtungsqualität und einen geringen mechanischen Aufwand auf.

## Ansprüche

1. Vorrichtung zum Modifizieren (Verzerren) von Filmvorlagen, die auf einem zu belichtenden Film angeordnet, durch Bewegung ihrer Halterung relativ zu diesem entsprechend der gewünschten Dehnung oder Stauchung bewegt und durch eine Lichtquelle belichtet werden, die in der durch die Relativbewegung zwischen Filmvorlage und Film festgelegten Achsrichtung über diese gefahren wird, wobei mit der Lichtquelle mindestens eine auf der Vorlage abrollende Andrückwalze mitbewegt wird, dadurch gekennzeichnet, daß die Halterung (15) lediglich auf einer Seite zum Einspannen der angrenzenden, parallel zur Achsrichtung der Relativbewegung zwischen Vorlage (19) und Film (20) bzw. der Bewegung der Lichtquelle (1) verlaufenden Kante der Vorlage angeordnet ist, und daß die Andrückwalze oder die Andrückwalzen (4,5) mit der Halterung (15) zur Übernahme ihrer Bewegung gekoppelt sind.

2. Kopiervorrichtung nach Anspruch 1, dadurch gekennzeichnet, daß an der Halterung (15) eine Zahnstange (14) vorgesehen ist, in die ein Ritzel (8) eingreift, dessen Drehung auf die Andrückwalze oder Andrückwalzen (4,5) übertragen wird.

3. Kopiervorrichtung nach Anspruch 1 oder 2, dadurch gekennzeichnet, daß die Kopplung über ein Getriebe, vorzugsweise einen Riementrieb (7) erfolgt.

Fig.1

Fig. 2

Fig.3